# EUROPEAN PATENT APPLICATION

(11) **EP 0 677 727 A2**
(43) Date of publication of application: **18.10.1995**
(21) Application number: 95400831.4
(22) Date of filing: 12.04.1995
(51) Int. Cl.: G01L 9/06, G01L 9/00

(54) **Pressure sensor assembly and method of producing the pressure sensor assembly**

(30) Priority: 15.04.1994 US 228305
(71) Applicant: SSI TECHNOLOGIES, INC., Janesville, Wisconsin 53547 (US)
(72) Inventor: Mattes, Michael F., Janesville, Wisconsin 53545 (US); Reimer, Lawrence B., Janesville, Wisconsin 53546 (US)
(74) Representative: Jacquard, Philippe Jean-Luc

(57) **Abstract**

A pressure sensor assembly (10) for measuring a pressure and a method of constructing the pressure sensor assembly (10), the assembly including a housing (12) having a cavity (20) defined by a recessed surface (24) and a sidewall (34) extending therefrom (24). A pressure sensor (22) is mounted to the recessed surface (24). The pressure sensor (22), includes a sensing bridge (39) and an amplifier circuit (41). A flexible elastomeric diaphragm (90) is mounted on the housing (12) above the recessed surface (24) to form a seal with the housing (12) and to enclose the cavity (20). The pressure sensor assembly (10) also includes a medium deposited between the recessed surface (24) and the diaphragm (90). The medium transmits the pressure on the diaphragm (90) to the pressure sensor (22). At least one terminal is mounted in the housing to provide an external electrical connection for the pressure sensor and to provide a fluid tight seal with the housing (12).

## Description

The present invention relates to transducers, and in particular, to a pressure sensor assembly for measuring pressures.

Transducers, in particular pressure sensors, are used in a variety of areas including automotive and industrial applications. In automobiles, pressure sensors monitor, among other things, oil pressure and transmission fluid pressure.

It is known in the art to provide a pressure sensor having a solid state pressure sensing bridge for generating an electrical signal functionally related to the pressure to which the bridge is exposed. In known constructions, the bridge is mounted within a housing having a cavity in which the pressure sensor chip is mounted. A silicone gel is placed in the cavity and a stainless steel cover is welded onto the housing over the cavity to secure the gel in place in the cavity.

The stainless steel cover is provided with a hole or conduit so that the pressure to be measured is communicated to the gel and from the gel to the sensing bridge. The conduit allows contaminants to invade the gel causing eventual deterioration of the apparatus and precluding the sensing bridge from being combined with the signal conditioning circuitry in the same cavity. This is because the signal conditioning circuitry is easily destroyed by the corrosive contaminants.

In another known apparatus, the cavity is sealed by welding a stainless steel diaphragm to the housing. Silicone fluid is injected into the cavity so that pressure is transmitted from the ambient environment to the diaphragm, from the diaphragm to the silicone fluid, and from the silicone fluid to the sensing bridge. While this construction provides a sealed and protected environment for the sensor, the process of back-filling the cavity with silicone fluid may introduce air into the cavity thereby reducing the response of the sensor. Additionally, introducing oxygen into the cavity can corrode electrical conductors thereby reducing the response of the pressure sensor. Also, a stainless steel diaphragm is typically more expensive than an elastomeric diaphragm, the response of the steel diaphragm to pressure forces is not linear and the steel diaphragm is more rigid thereby limiting the use of such a diaphragm to applications above the 25 psi.

Also, it is common for the silicone fluid in known devices to leak out of the cavity along the electrical terminals that connect the sensing circuit in the housing to an external electronic system receiving the pressure signal. This usually occurs when the sensor is exposed to high pressures. This leakage creates additional reliability problems.

The invention provides a pressure sensor assembly including a housing having a cavity and a pressure sensor in the cavity. The pressure sensor includes a sensing bridge for producing an output functionally related to pressure and an amplifier circuit connected to the sensing bridge to amplify the output from the sensing bridge. The provision of a fully integrated sensing bridge and amplifier within the housing simplifies the system to which the pressure sensor is connected and reduces the number of components required. However, the fully integrated pressure sensor must be sealed from corrosive elements in the environment.

Therefore, a pressure transmission fluid medium is deposited in the cavity and a flexible elastomeric diaphragm having therein a convolution or rib is mounted on the housing above the cavity to form a fluid tight seal with the housing and completely enclose the medium, the sensing bridge and the amplifier within the cavity. Pressure on the diaphragm is transmitted to the medium and from the medium to the pressure sensor.

The convolution in the diaphragm allows the diaphragm to adjust to variances in the volume of fluid deposited in the cavity and also eliminates stress forces applied to the diaphragm when the diaphragm is clamped onto the housing. Such stresses could otherwise offset the output of the pressure sensor.

The invention also provides at least one terminal providing an electrical connection between the pressure sensor within the cavity and the external surface of the housing. The terminal is adapted to be connected to a circuit external to the pressure sensor such as a power supply or signal conditioning circuitry. Because the pressure sensor may be subjected to extremely high pressures, the terminal must also provide a fluid tight seal between the cavity and the external surface of the housing. Therefore, the terminal is molded into the housing and includes at least one radially extending, annular or disk-shaped land or flange. The land includes at least one tapered surface that engages the housing irrespective of temperature induced expansion or contraction of the material forming the housing. The engagement between the tapered surface and the material forming the housing secures the terminal within the housing and prevents leakage of the silicone fluid from the cavity as well as leakage into the cavity of corrosive elements that are outside the housing.

The invention also provides a method of producing a pressure sensor assembly. The method includes the steps of providing a housing having a cavity, mounting a pressure sensor in the cavity, depositing a medium in the cavity and placing a diaphragm over the cavity after depositing the medium in the cavity.

It is a principal advantage of the invention to provide a pressure sensor assembly having a housing and a sensing bridge and associated signal conditioning circuitry, such as an amplifier, within a sealed cavity in the housing.

It is also an advantage to provide a pressure sensor with a silicone fluid in the cavity and a flexible elastomeric diaphragm secured to the housing and communicating with the sealed cavity so as to transmit ambient pressures to the fluid and to the sensing bridge.

It is another advantage to provide a pressure sensor having at least one electrical terminal in the housing wherein the electrical terminal communicates between the sensing bridge and the external surface of the housing but provides a seal with the housing to prevent leakage of the fluid from the cavity during measurement of high pressures.

Other features and advantages of the invention will become apparent to those skilled in the art upon review of the following detailed description, claims and drawings.

Figure 1 is a perspective view of the pressure sensor assembly of the present invention.

Figure 2 is an exploded view of the pressure sensor assembly of Figure 1.

Figure 3 is a view taken along line 3-3 of Figure 1.

Figure 4 is an enlarged partial view of Figure 3.

Figure 5 is a cross-sectional view of the pressure sensor assembly showing the step of mounting a pressure sensor within the assembly of the present invention.

Figure 6 is a cross-sectional view of the pressure sensor assembly of Figure 1 showing the step of depositing a medium in the assembly of the present invention.

Figure 7 is a cross-sectional view of the pressure sensor assembly of Figure 1 and a diaphragm deposition tool and showing the step of placing a diaphragm on the housing over the medium.

Figure 8 is a cross-sectional view of the pressure sensor assembly of Figure 1 showing the step of crimping an end cap on the assembly of the present invention.

Figure 9 is a schematic diagram of the pressure sensor showing the sensing bridge and the amplifier circuit.

Before one embodiment of the invention is explained in detail, it is to be understood that the invention is not limited in its application to the details of construction and the arrangement of components set forth in the following description or illustrated in the drawings. The invention is capable of other embodiments and of being practiced or of being carried out in various ways. Also, it is to be understood that the phraseology and terminology used herein is for the purpose of description and should not be regarded as limiting.

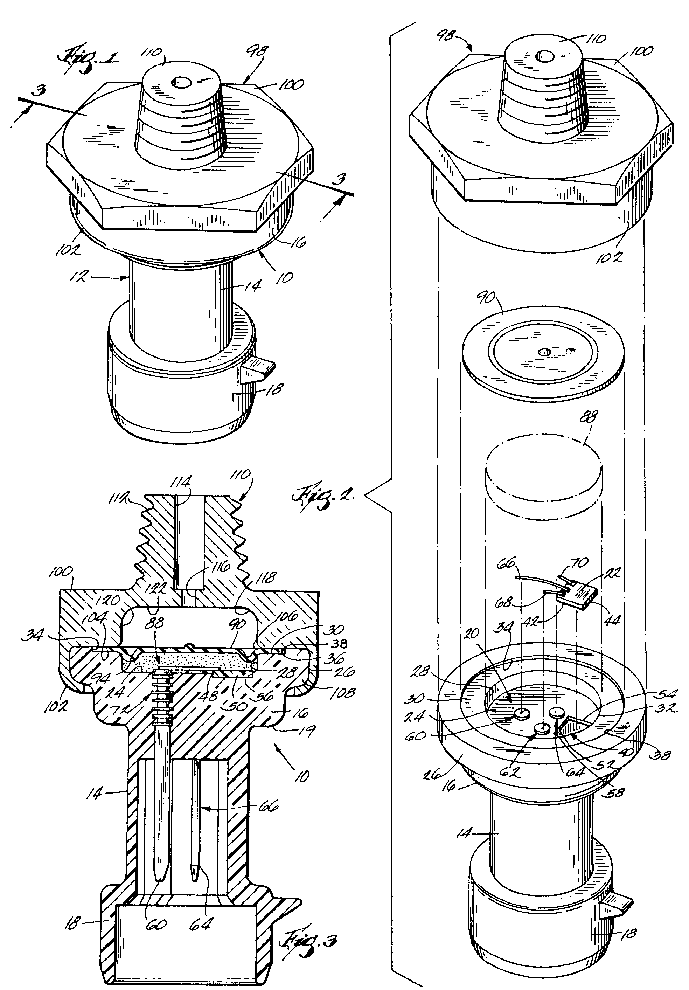

The pressure sensor assembly of the present invention is generally designated by the reference number 10. The pressure sensor assembly 10 includes a housing 12 having a cylindrical body portion 14 and a pressure sensor holding portion 16. As shown in Fig. 1, the cylindrical body portion 14 depends from the pressure sensor holding portion 16. A hollow, cylindrical, connector portion 18 depends from the cylindrical portion 14.

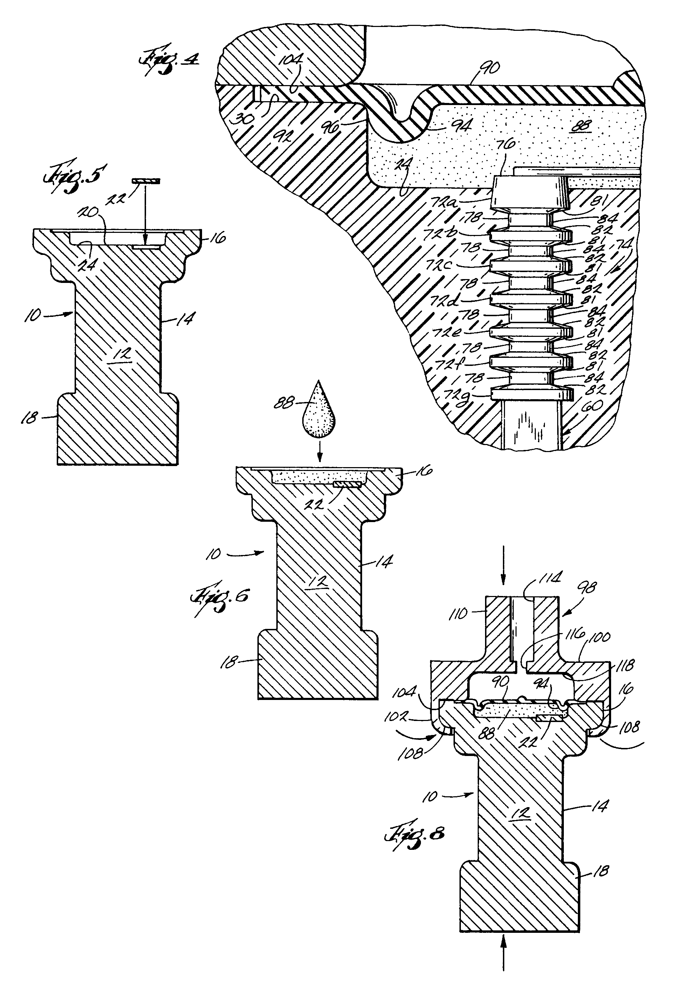

The pressure sensor holding portion 16 of the housing 12 includes an external surface 19 and an internal cavity 20 (Fig. 2). A pressure sensor 22 is mounted in the cavity 20. A cylindrical sidewall 28 extends upwardly from recessed surface 24 and intersects a second recessed annular surface 30 at edge 32. A second cylindrical sidewall 34 extends upwardly from the periphery of the second recessed surface 30 and intersects the outer surface 26 of the housing 12 at edge 38 (Fig. 2 only). As shown in Fig. 9, the pressure sensor 22 includes a sensing bridge 39 and an amplifier circuit 41 connected to the sensing bridge. While any integrated circuit pressure sensing mechanism is appropriate, the sensing bridge is preferably a fully integrated full-bridge configuration of two variable resistance piezoresistive elements (VAR) combined with two fixed resistance reference resistors (REF). Such a sensing bridge is described in U.S. Patent Nos. 4,744,863; 4,853,669 and 4,996,082; which are incorporated herein by reference.

The sensing bridge 39 generates a differential voltage output that is functionally related to the pressure within the cavity 20. The differential voltage output is amplified by the amplifier circuit 41. As shown in Fig. 9, the amplifier circuit includes an operational amplifier (AMP) which provides the gain of the circuit. Also shown in Fig. 9 are three outside connections required to operate the pressure sensor 22; a power connection (shown schematically as V_{cc}), a ground connection 23 (also shown schematically connected to the sensing bridge 39), and an output connection (OUT).

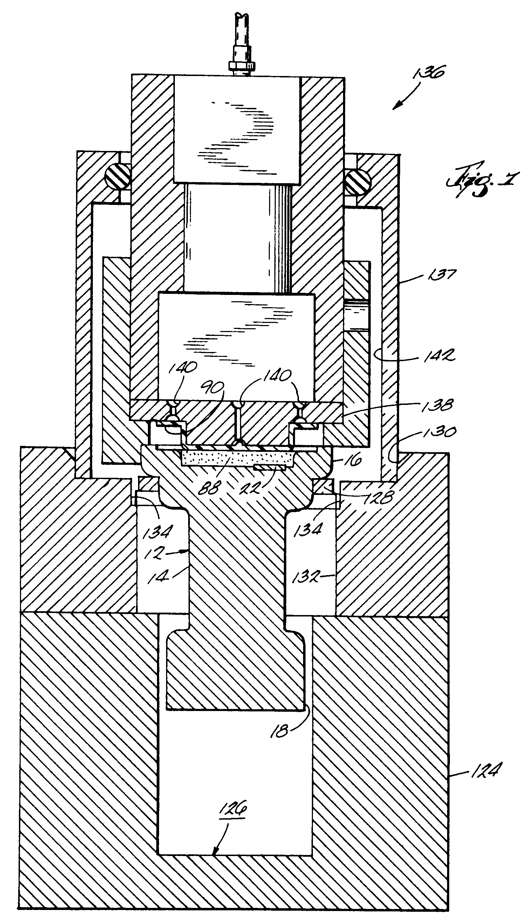

Recessed surface 24 includes a depression 40 for housing pressure sensor 22. The depression 40 is square in shape corresponding to the four sides 42, 44, 46, (not shown) and 48 of pressure sensor 22. Though there are other ways of securing the sensor 22 in the depression 40, an adhesive is placed between the bottom surface 50 of pressure sensor 22 and depression 40 in order to secure the pressure sensor 22 within the cavity 20. In particular, the depression 40 includes sidewalls 52, 54, 56, and 58 (between Figs. 2 and 3, all four are shown) which act to locate and to prevent movement of pressure sensor 22 within the cavity 20 and parallel to recessed surface 24.

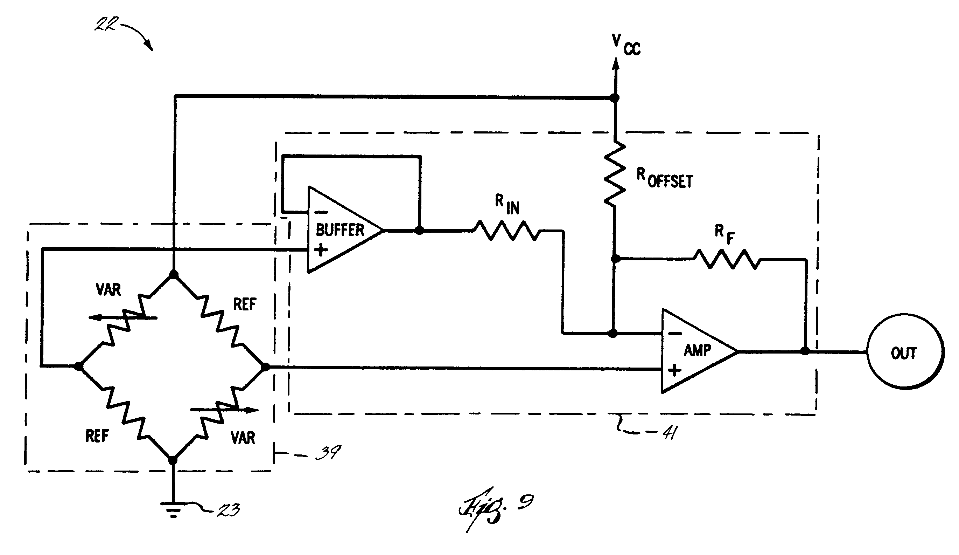

Three terminals 60, 62, 64 are electrically connected to ground 23, OUT, and V_{cc}, respectively, and extend downwardly from the recessed surface 24 through the housing 12 to the external surface 19 of the housing 12 and into a cylindrical cavity 66 within the cylindrical body portion 14 of housing 12. As best shown in Fig. 4, each terminal includes a plurality of annular or disk-shaped lands or flanges 72a-g which surround the upper portion 74 of each terminal and are separated by recesses 78. As shown in Fig. 4, lands 72a-f each include a downwardly facing tapered surface 81 and lands 72b-g each include an upwardly facing tapered surface 82. The terminals 60, 62 and 64 also include surfaces 84 extending between the surfaces 81 and 82 of adjacent lands 72a-g. The surfaces 81, 82 and 84 together define the recesses 78 separating the lands 72a-g. The terminals 60, 62 and 64, each have an upper surface 76 and they are operatively connected to V_{cc}, ground 23 and OUT of pressure sensor 22 by leads 66, 68, and 70, respectively.

Each terminal 60, 62, and 64 is molded into the pressure sensor holding portion 16 of the housing 12 such that the material forming housing 12 fills the recesses 78 formed between each land. As a result, when pressure in the cavity is exerted on the upper surface 76 of each terminal, lower tapered surfaces 81 are pressed against the material forming the housing 12 thereby preventing movement of the terminal within the housing 12 and, as will be described in greater detail below, preventing leakage of fluid from the cavity 20.

The material, preferably a plastic, forming the housing 12, may expand or contract slightly due to temperature fluctuations. If the material contracts, the material in recesses 78 will tend to contract thereby pulling away from recesses 78 between each land. Nevertheless, a portion of the material will remain within recess 78 and in complementary contact with the tapered surfaces 81 of lands 72a-g. As a result, each terminal will remain positioned within the pressure sensor holding portion 16 of the housing 12 when pressure is exerted on the upper surface 76 of each terminal and a seal will remain intact between surfaces 81 and the material portions of the housing 12 in the recesses.

Referring to Figs. 2-4, a medium 88 is housed in cavity 20 of housing 12. While any nonconductive, noncorrosive fluid is appropriate, the preferred embodiment has a silicone fluid medium such as polydimethylsiloxane. A diaphragm 90 is placed over cavity 20 such that a portion of the lower surface 92 of the periphery of the diaphragm 90 engages the recessed surface 30. Though the diaphragms may be made of other types of materials, the diaphragm 90 of the preferred embodiment is made of a flexible elastomeric material. The elastomeric diaphragm 90 includes an annular convolution or rib 94 (Fig. 4) which extends over edge 32 into the portion of cavity 20 bordered by sidewall 28. The rib functions as a strain relief to eliminate stress on the diaphragm caused by overfilling or underfilling of the cavity with the silicone medium and to eliminate stresses applied to the diaphragm during the process of securing the diaphragm to the housing, which process will be described below in detail. Such stresses could otherwise produce an offset in the output of the pressure transducer. The diaphragm will perform these functions equally well if placed on the housing in an inverted position (not shown).

Referring to Fig. 2, the pressure sensor assembly 10 includes an end cap 98 having a body portion 100 with a cylindrical crimping wall 102 depending therefrom. The diameter of the crimping wall 102 is larger than the diameter of the pressure sensor holding portion 16 of the housing 12.

In order to attach the end cap 98 to the housing 12, crimping wall 102 is placed over shoulder 108, Fig. 3, of the pressure sensor holding portion 16 of housing 12 such that the lower surface 104 of the body portion 100 of the end cap 98 engages the outer surface 26 of the housing 12 and the upper surface 106 of elastomeric diaphragm 90. The crimping wall 102 is crimped over shoulder 108 of housing 12 so as to attach end cap 98 to housing 12. The end cap 98 may also be clamped to the housing in a variety of other ways or may be threaded onto the housing. Proper choice of the diaphragm thickness, diaphragm material, durometer and the length of sidewall 34 allows diaphragm 90 to seal the fluid 88 in the cavity and prevent leakage of the pressurized medium being measured from leaking to the outside world or into the cavity after the end cap has been attached.

As seen in Fig. 1-3, a connector portion 110 extends upwardly from the body portion 100 of end cap 98. The end cap 98 includes a threaded outer surface 112. The threaded outer surface 112 may be threaded into a receiving port (not shown) to connect the pressure sensor assembly 10 to an engine block or to any other apparatus where it is desired to measure a pressure. As an alternative (not shown), the outer surface 112 of the end cap 98 may be smooth to provide a fitting to which a hose can be connected.

The connector portion 110 includes a passageway 114 extending axially through the connector portion 110. The passageway 114 has a reduced diameter portion 116 that interconnects the passageway 114 to a cavity 118 within the body portion 100 of end cap 98. Reduced diameter portion 116 provides a damping effect for high pressure pulses. Cavity 118 is defined by the cylindrical sidewall 120 extending from a recessed surface 122 within end cap 98. The diameter of cavity 118 is approximately equal to the diameter of cavity 20 in the pressure sensor holding portion 16 of housing 12.

Referring to Figs. 5-8, the method of assembling the pressure sensor assembly includes first molding the housing 12 around terminals 60, 62 and 64, mounting the pressure sensor 22 within the depression 40 in the recessed surface 24 of housing 12 and connecting leads 66, 68, and 70 to the pressure sensor. As best seen in Fig. 2, leads 66, 68, and 70 are connected to the upper surfaces 76 of the terminals 60, 62, and 64, respectively.

As shown in Fig. 7, the housing 12 is positioned in a holding block 124. The holding block 124 includes a cylindrical chamber 126 for receiving the housing 12 and an annular support 128 mounted in the chamber to support housing 12 adjacent holding portion 16. Cylindrical chamber 126 includes an upper portion 130, above support 128, and a lower portion 132 below support 128. Support 128 has therein eight air channels 134 (only two of which are shown in Fig. 7) communicating between upper portion 130 and lower portion 132.

The silicone fluid medium 88 is deposited in cavity 24 to completely cover pressure sensor 22, Fig. 6. The elastomeric diaphragm 90 is deposited over the cavity 24. As shown in Fig. 7, in order to prevent the formation of air pockets in cavity 22, an air suction deposition tool 136 including an outer shell 137 and a depth guide 138 is used to place the elastomeric diaphragm 90 on the housing 12 to cover the cavity 24. The elastomeric diaphragm 90 is held on the depth guide 138 by air suction through channels 140 in the depth guide 138. The annular rib 94 of the elastomeric diaphragm 90 is temporarily eliminated through deformation as the elastomeric diaphragm 90 is pulled onto the depth guide 138 by the air suction deposition tool 136. The elastomeric diaphragm 90 is positioned by the air suction deposition tool 136 so that the depth guide 138 is over cavity 24, so that the diaphragm 90 contacts the medium 88, and so that the outer shell 137 engages the holding block 124 to form an air tight cavity 142 communicating with cylindrical chamber 126. Air is then evacuated from cavity 142 by the evacuation device (not shown) which communicates with the lower portion 132 of cylindrical chamber 126.

The diaphragm 90 is then released from the air suction deposition tool 136 to allow rib 94 to resume its original shape and engage the surface 28 (Fig. 8) thereby sealing the silicone fluid within the cavity and fixing the elastomeric diaphragm 90 in position over the cavity 20. As the diaphragm 90 is released from the air suction deposition tool 136, the rib 94 of diaphragm 90 quickly begins to roll away from and off of the depth guide 138. Because the diaphragm 90 is in contact with the medium 88, a traveling wave of medium 88 forms in front of the rolling rib 94 of the diaphragm 90. In the event that any air is left in the cavity 142, the traveling wave reduces the likelihood that air pockets will form underneath the diaphragm. As a result, the volume defined by recessed surface 24, sidewall 28 and elastomeric diaphragm 90 is free of air pockets.

In another embodiment (not shown) the elastomeric diaphragm is positioned on the air suction deposition tool 136 in an inverted position from that described above (i.e., the annular rib 94 faces upward) and the diaphragm does not deform around the depth guide 138 as described above. When the outer shell 137 engages the holding block 124, the pressures in the air tight cavity 142 equalize and the diaphragm drops onto the housing 12 to enclose the cavity 20. Because the cavity 142 is evacuated, i.e., a vacuum, there are no air pockets beneath the diaphragm.

Once elastomeric diaphragm 90 is positioned, end cap 98 (Fig. 8) is placed over the pressure sensor receipt portion 16 of the housing 12. Crimping wall 102 is then crimped around shoulder 108 so as to prevent axial movement of the end cap 98 away from the housing 12.

The recessed surface 30 of the housing 12 and the lower surface 104 of the body portion 100 pinch the flexible elastomeric diaphragm 90 about the periphery of the elastomeric diaphragm 90 to form a tight seal (capable of withstanding high pressures) between the end cap 98, the housing 12 and the diaphragm 90. The seal secures the silicone medium 88 in the cavity 12. As discussed above, any stress applied to the diaphragm by the pinching action of the end cap 98 is eliminated by the rib 94 in diaphragm 90.

In operation, the pressure sensor assembly 10 is connected to a system, such as an engine, by threads 112 (Fig. 2) on the connector portion 110 of end cap 98. The system has a pressurized environment and the end cap 98 is exposed to that environment so that the pressure in that environment can be measured by the pressure sensor 22. Terminals 60, 62, and 64 are adapted to be interconnected to electrical components (not shown) which supply power (V_{cc}) to pressure sensor 22 and which process the signal (OUT) generated by the pressure sensor 22. As shown in Fig. 8, fluid from the pressurized environment enters cavity 118 through first passage 114 and second passage 116 thereby exerting on elastomeric diaphragm 90 the fluid pressure of the pressurized environment. Medium 88 communicates this pressure to the pressure sensor 22 whereby a signal is generated corresponding to the pressure within the system. The signal (OUT) is then sent to the electrical components (not shown) where it is processed.

Various features of the invention are set forth in the following claims.

## Claims

1. A pressure sensor assembly for measuring a pressure, the assembly comprising:
a housing having a cavity defined by a recessed surface and a sidewall extending therefrom;
a pressure sensor mounted to said recessed surface, said pressure sensor including a sensing bridge and an amplifier circuit;
a diaphragm mounted to said housing above said recessed surface, said diaphragm forming a fluid tight seal with said housing to completely seal said cavity; and
a medium deposited between said recessed surface and said diaphragm so as to communicate pressure on said diaphragm to said pressure sensor, said medium completely filling said enclosed cavity.

2. The pressure sensor assembly of claim 1 further including at least one electrically conductive terminal operatively connected to said pressure sensor, said terminal having at least one land molded into said housing so as to prevent movement of said terminal in response to pressure on said diaphragm.

3. The pressure sensor assembly of claim 2 wherein said terminal land includes a tapered annular surface engaging said housing to prevent leakage of said medium from said housing.

4. The pressure sensor assembly of claim 1 further including an end cap connected to said housing to secure said diaphragm to said housing and seal said medium in said cavity.

5. The pressure sensor assembly of claim 4 wherein said end cap includes a passageway for communicating pressure to said diaphragm.

6. The pressure sensor assembly of claim 1 wherein said diaphragm is a flexible elastomeric diaphragm having formed therein an annular stress relief rib.

7. The pressure sensor assembly of claim 1 wherein said recessed surface includes a depression for receiving said pressure sensor, said depression being dimensioned so as to hold and prevent movement of said pressure sensor along said recessed surface.

8. A pressure sensor assembly for measuring a pressure, the assembly comprising:
a housing having a cavity defined by a recessed surface and at least one sidewall extending from said recessed surface;
means for forming a fluid tight seal above said cavity, said means including a flexible elastomeric diaphragm;
a pressure sensor mounted on said recessed surface of said cavity, said pressure sensor generating a signal responsive to the pressure on said elastomeric diaphragm; and
a medium completely filling said cavity, said medium transmitting the pressure on said elastomeric diaphragm to said pressure sensor.

9. The pressure sensor assembly of claim 8 further including at least one terminal extending through said housing into said cavity, such that said terminal is operatively connected to said pressure sensor.

10. The pressure sensor assembly of claim 9 wherein said terminal includes at least one land extending radially outward from said terminal, said land molded within said housing so as to prevent movement of said terminal in response to pressure on said diaphragm and so as to prevent leakage of said medium from said cavity.

11. The pressure sensor assembly of claim 8 further including an end cap connected to said housing, said end cap securing said diaphragm to said housing, sealing said medium in said cavity, and including a passageway for communicating pressure to said diaphragm.

12. The pressure sensor assembly of claim 11 further including a connector for interconnecting said assembly to a system of pressure.

13. The pressure sensor assembly of claim 12 wherein said connector includes a threaded end portion on said end cap.

14. The pressure sensor assembly of claim 8 wherein said medium is a silicone fluid.

15. The pressure sensor assembly of claim 8 further including an adhesive for affixing said pressure sensor to said recessed surface.

16. The pressure sensor assembly of claim 8 wherein said diaphragm has formed therein an annular stress relief rib.

17. A pressure sensor assembly for measuring a pressure, the assembly comprising:
a housing having a cavity defined by a recessed surface and at least one sidewall extending from said recessed surface;
a diaphragm extending over said cavity, said diaphragm forming a seal with said housing and being exposed to ambient pressure;
a pressure sensor mounted on said recessed surface of said cavity, said pressure sensor generating a signal responsive to pressure on said diaphragm; and
a medium in said cavity, said medium communicating the pressure on said diaphragm to said pressure sensor; and
at least one terminal extending through said housing and communicating with said cavity, such that said terminal is operatively connected to said pressure sensor, and includes a central portion and at least one land extending radially outward from said central portion, said land defining a shoulder surrounding said central portion and forming a second fluid tight seal with said housing.

18. The pressure sensor assembly of claim 17 wherein said shoulder has a tapered annular surface transverse to said axis and engaging said housing to prevent leakage of said medium from said housing.

19. The pressure sensor assembly of claim 17 further including an end cap connected to said housing, said end cap securing said diaphragm to said housing to seal said medium in said cavity and said end cap including a passageway for communicating pressure to said diaphragm.

20. The pressure sensor assembly of claim 19 further including a connector for connecting the pressure sensor assembly to a system of pressure.

21. The pressure sensor assembly of claim 20 wherein said connector includes a threaded end portion on said end cap.

22. The pressure sensor assembly of claim 17 wherein said medium is a silicone fluid.

23. The pressure sensor assembly of claim 17 wherein said diaphragm is a flexible elastomeric diaphragm including an annular stress relief rib.

24. A method of constructing a pressure sensor assembly, the method comprising the steps of:
(a) providing a housing having a cavity defined by a recessed surface and a sidewall extending therefrom, and said housing having an external surface;
(b) mounting a pressure sensor to said recessed surface;
(c) depositing a medium in said cavity; and
(d) placing a diaphragm over said cavity after said step (c) to enclose said cavity such that said medium completely fills said cavity.

25. The method of claim 24 wherein said step (a) further includes the steps of;
(e) providing an electrically conductive terminal; and
(f) molding said housing around said terminal such that said terminal extends between said cavity and said external surface.

26. The method of claim 25 and further including the additional step of providing said terminal with a land engageable with said housing so as to prevent movement of said terminal in response to pressure on said diaphragm and so as to prevent leakage of said medium from said cavity.

27. The method of claim 24 and further including the additional step of interconnecting an end cap to said housing, to communicate pressure to said diaphragm.

28. The method of claim 24 and further including the additional step of securing an end cap to said housing thereby securing said diaphragm in place on said housing to seal said medium in said cavity.

29. The method of claim 24 wherein the step of mounting said pressure sensor to said recessed surface includes the additional step of affixing said pressure sensor to said recessed surface with an adhesive.

30. An apparatus comprising:
a housing; and
an electrically conductive terminal within said housing, said terminal having an axis and including a central portion extending along said axis and at least one land defining a shoulder surrounding said central portion and having a surface forming a seal with said housing to prevent fluid flow between said housing and said terminal.

31. The apparatus as set forth in Claim 30 wherein said surface is transverse to said axis.

32. The apparatus as set forth in Claim 30 wherein said housing includes a shoulder having a surface complimentary to said shoulder surface of said terminal.

33. The apparatus as set forth in Claim 30 wherein said terminal is molded within said housing.

34. The apparatus as set forth in Claim 30 wherein said land extends radially outward from said axis.

35. An electrically conductive terminal adapted to be supported within a housing to form a fluid tight seal with the housing, said terminal having an axis and comprising:
a central portion extending along said axis; and
a plurality of lands extending outward from said axis such that each land defines a shoulder surrounding said central portion and each shoulder having a surface adapted to form a fluid tight seal with a portion of the housing.

36. An electrically conductive terminal as set forth in Claim 35 wherein said lands extend radially outward from said axis.

37. An electrically conductive terminal as set forth in Claim 35 wherein said surfaces are transverse to said axis.
